# EUROPÄISCHE PATENTSCHRIFT

(11) **EP 2 909 476 B1**
(45) Veröffentlichungstag und Bekanntmachung des Hinweises auf die Patenterteilung: **15.11.2017**
(21) Anmeldenummer: 13776807.3
(22) Anmeldetag: 15.10.2013
(51) Int. Cl.: F03D 1/00, E04G 3/24, E04H 12/34, F03D 13/20, E04G 1/36, E04H 12/00, E04H 12/12, E04H 12/18, E06C 1/39, E04G 5/00, F03D 13/10

(54) **VERSORGUNGSGERÜST FÜR EINEN TURM, TURM MIT EINEM VERSORGUNGSGERÜST SOWIE VERFAHREN ZUM ERRICHTEN EINES VERSORGUNGSGERÜSTS IM INNEREN EINES TURMS**
SUPPLY FRAME FOR A TOWER, TOWER WITH A SUPPLY FRAME AND METHOD FOR ERECTING A SUPPLY FRAME IN THE INTERIOR OF A TOWER
STRUCTURE DE SERVICE DESTINÉE À UNE TOUR, TOUR DOTÉE D'UNE STRUCTURE DE SERVICE ET PROCÉDÉ DE CONSTRUCTION D'UNE STRUCTURE DE SERVICE À L'INTÉRIEUR D'UNE TOUR

(30) Priorität: 16.10.2012 DE 102012109860
(43) Veröffentlichungstag der Anmeldung: 26.08.2015
(73) Patentinhaber: Max Bögl Wind AG, 92369 Sengenthal (DE)
(72) Erfinder: HIERL, Martin, 92318 Neumarkt (DE)
(74) Vertreter: Bergmeier, Werner
(86) Internationale Anmeldenummer: PCT/EP2013/071482
(87) Internationale Veröffentlichungsnummer: WO 2014/060388

(56) Entgegenhaltungen:
- EP-A2- 2 187 050
- WO-A2-2008/000565
- DE-A1-102009 055 726
- DE-U1-202011 106 727
- JP-A- 2002 129 741

## Beschreibung

Die vorliegende Erfindung betrifft ein Versorgungsgerüst für einen Turm, insbesondere einen Windkraftturm aus ringförmigen oder ringsegmentförmigen Betonfertigteilen, welches Turminneneinbauten trägt und welches im Inneren des Turms anordenbar ist. Unter Turminneneinbauten werden im Rahmen der vorliegenden Erfindung eine Liftanordnung, beispielsweise eine Liftkabine mit Hubseilen, Kabelanordnungen, umfassend Leistungskabel, Versorgungskabel und Steuerungskabel, Plattformen zur Montage und Wartung, Leitern mit Steigschutz sowie Beleuchtungseinheiten verstanden. Das Versorgungsgerüst erstreckt sich im Wesentlichen über die gesamte Höhe des Turms und ist aus mehreren übereinander angeordneten und miteinander verbundenen Versorgungsgerüstmodulen zusammengesetzt. Weiterhin betrifft die Erfindung einen Turm aus Betonfertigteilen, in dessen Inneren ein derartiges Versorgungsgerüst angeordnet ist sowie ein Verfahren zum Errichten eines Versorgungsgerüsts im Inneren eines Turms.

Um die genannten Turminneneinbauten geschützt vor Umwelteinflüssen im Inneren eines Turms anzuordnen, ist es bei Windkrafttürmen aus Stahlrohrabschnitten bekannt geworden, diese Komponenten direkt an die Innenwandungen der Stahlrohrabschnitte anzuschweißen. Dies führt jedoch zu einer Schwächung des entsprechenden Stahlrohrabschnitts, so dass die Wandstärke deutlich erhöht werden muss.

Die WO 03/067083 A1 hat daher vorgeschlagen, derartige Elemente mittels Magnetkräften an der Innenwandung des jeweiligen Stahlrohrabschnitts zu befestigen. Eine derartige Ausführung ist jedoch nur bei reinen Stahlrohrtürmen möglich und bei heutigen Türmen aus Beton nicht einsetzbar.

Die DE 20 2010 007 565 U1 schlägt vor, einen Windkraftturm aus mehreren rohrförmigen Turmabschnitten zu erstellen, deren Enden jeweils einen Flansch aufweisen, mittels welchem sie an dem jeweils darüber liegenden Turmabschnitt befestigt sind. Die Inneneinbauten, wie ein Leiterelement, Kabeln, ein Lift sowie eine Plattform, sollen zu einer vormontierten Einheit zusammengefasst werden, die dann in den jeweiligen Turmabschnitt eingebracht werden und dort mittels entsprechender Haken an dem Flansch des Turmabschnitts eingehängt werden. Die Inneneinbauten können dabei vor Montage des jeweiligen Turmabschnitts in diesen vormontiert werden, oder aber nach Montage des jeweiligen Turmabschnitts mittels eines Krans in diesen eingehoben werden. Der Aufbau eines Windkraftturms kann hierdurch erschwert sein, da vormontierte Turminnenbauten bei der Montage stören können oder aber eine aufwändige Kranmontage der Inneneinbauten erforderlich ist. Die Stabilität des Turminnenbaus kann aufgrund der Einzelbefestigung der jeweils vormontierten Einheiten ebenfalls eingeschränkt sein.

Die DE 20 2011 106 727 U1 schlägt ein als Tragrohr ausgeführtes Versorgungsgerüst für eine Windkraftanlage vor, das aus mehreren über Flansche miteinander verbundenen Rohrsegmenten besteht, wobei das oberste Rohrsegment über eine Kralle am Kopf des Turms und das unterste Rohrsegment mit dem Boden des Turms befestigt ist. An dem Tragrohr sind die Aufstiegsleiter, die Leistungskabel und ein Versorgungsschacht für Steuerkabel und eine Lichtversorgung befestigt. Zur Montage muss zunächst das erste Rohrsegment auf dem Boden des Turms aufgestellt und mittels Druckstützen und Zugstreben an der Innenwand des Turms befestigt werden. Anschließend werden weitere Rohrsegmente auf dem ersten Rohrsegment montiert und weitere Druckstützen und Zugstreben zur Stabilisierung des Tragrohrs montiert. Aufgrund der Ausführung des Versorgungsgerüsts als Tragrohr sind die Anordnungsmöglichkeiten der Turminneneinbauten eingeschränkt.

Weitere Beispiele aus dem Stand der Technik sind aus DE102009055726 und WO2008000565 bekannt. Aufgabe der vorliegenden Erfindung ist es, ein Versorgungsgerüst für einen Windkraftturm vorzuschlagen, welches einfach und kostengünstig herstellbar und montierbar ist und dennoch eine hohe Stabilität aufweist.

Die Aufgabe wird gelöst mit den Merkmalen der unabhängigen Ansprüche.

Ein Versorgungsgerüst für einen Turm, insbesondere einen Windkraftturm aus ringförmigen oder ringsegmentförmigen Betonfertigteilen, trägt Inneneinbauten, insbesondere eine Leiter, eine Liftanordnung, insbesondere eine Liftkabine mit Hubseilen, Kabelanordnungen, Plattformen und Beleuchtungseinheiten. Das Versorgungsgerüst ist im Inneren des Turms anordenbar und erstreckt sich im Wesentlichen über die gesamte Höhe des Turms. Das Versorgungsgerüst ist dabei aus mehreren übereinander angeordneten und miteinander verbundenen Versorgungsgerüstmodulen zusammengesetzt. Ein Turm, insbesondere ein Windkraftturm aus ringförmigen oder ringsegmentförmigen Betonfertigteilen, weist in seinem Inneren ein derartiges Versorgungsgerüst auf.

Erfindungsgemäß weist das Versorgungsgerüst eine fachwerkartige, unter Eigengewicht und Nutzlast vorzugsweise nicht knickstabile, fachwerkartige Gitterstruktur auf und ist hängend an einem oberen Betonfertigteil des Turms befestigbar. Das Versorgungsgerüst mit den Turminnenbauten ist dabei durch sein Eigengewicht und durch die Nutzlast im Betrieb lediglich durch Zugkräfte stabilisiert, so dass es eine selbsttragende Einheit bildet, welche für sämtliche Turminneneinbauten eine hohe Stabilität im Betrieb gewährleistet. Unter "selbsttragend" wird dabei im Rahmen der vorliegenden Erfindung ein Aufbau verstanden, der, neben seiner oberen Aufhängung, keine weitere Stabilisierung durch Zwischenbefestigungen, seitliche Druckstützen oder Abspannungen oder zusätzliche, der oberen Aufhängung entgegenwirkende Abspannungen etc. benötigt. Vorzugsweise wird eine unter Eigengewicht und Nutzlast an sich nicht knickstabile Gitterstruktur vorgesehen, welche erst im Betrieb unter Eigengewicht und Nutzlast ihre hohe Stabilität erhält. Durch die knappe, nicht knickstabile Auslegung bei hängender Befestigung ist eine sehr kostengünstige und materialsparende Herstellung des Versorgungsgerüsts möglich. Aufgrund der fachwerkartigen Gitterstruktur ist das Versorgungsgerüst aus einfachen und kostengünstigen Modulbauteilen, wie Eckstielen, Querstreben und Diagonalversteifungen aufgebaut, welche zudem ein einfaches Handling bei der Errichtung des Versorgungsgerüsts ermöglichen. So können bei einem Verfahren zum Errichten eines Versorgungsgerüsts in vorteilhafter Weise die einzelnen Versorgungsgerüstmodule auch im Inneren des Windkraftturms aus den Modulbauteilen zusammengesetzt und die Versorgungsgerüstmodule miteinander zu einer selbsttragenden Einheit verbunden werden.

Die Versorgungsgerüstmodule sind vorzugsweise gleichartig zueinander ausgebildet. Insbesondere das oberste und das unterste Versorgungsgerüstmodul können jedoch auch als Sondermodule ausgebildet sein, um beispielsweise einen Anschluss an die Befestigungsvorrichtung zu erleichtern.

Nach einer vorteilhaften Ausführung der Erfindung sind zumindest eine Liftanordnung und eine Leiter, vorzugsweise jedoch sämtliche Turminneneinbauten, in einem Innenraum des Versorgungsgerüsts angeordnet. Sämtliche Einheiten sind hierdurch bereits während der Montage des Versorgungsgerüsts aus den Versorgungsgerüstmodulen geschützt im Inneren der fachwerkartigen Gitterstruktur angeordnet. Zudem ist die Zugänglichkeit der einzelnen Turminneneinbauten für Wartungs- und Montagepersonal durch die kompakte Anordnung im Innenraum des Versorgungsgerüsts erleichtert, während zugleich Komponenten des Turms, beispielsweise externe Spannglieder, ebenfalls problemlos zugänglich sind.

Vorteilhafterweise sind die Liftanordnung und die Leiter in dem Innenraum derart zueinander positioniert, dass die Leiter von einer Liftkabine aus jederzeit und in jeder Höhe betretbar ist. Die Leiter bildet hierdurch in vorteilhafter Weise einen sicheren Fluchtweg über die gesamte Höhe des Turms.

Vorteilhaft ist es, wenn zumindest ein Leitermodul, eine Beleuchtungseinheit, Seilführungen der Liftanordnung und Kabelbefestigungen an den mehreren Versorgungsgerüstmodulen vormontiert sind. Die Montage der Turminneneinbauten kann hierdurch besonders schnell und einfach bereits außerhalb des Windkraftturms und vor dem Aufbau des Versorgungsgerüsts aus den einzelnen Versorgungsgerüstmodulen erfolgen. Zugleich ist die Montage der Kabel in einem Stück durch die bereits vorgesehenen Kabelbefestigungen erleichtert.

Vorteilhaft ist es weiterhin, wenn die fachwerkartige Gitterstruktur des Versorgungsgerüsts den Innenraum vollständig umschließt und aus einem elektrisch leitenden Werkstoff besteht. Dadurch können unplanmäßige elektrische Spannungen über die Gitterstruktur vom Betonturmkopf bis zum Fundament hin abgeleitet werden.

Daher ist es vorteilhaft, wenn das Versorgungsgerüst eine Erdungsanlage aufweist oder mit einer Erdungsanlage des Turms verbindbar ist. Sämtliche Turminnenbauten sind dabei dann über das Versorgungsgerüst geerdet.

Weiterhin ist es vorteilhaft, wenn die Höhe eines Versorgungsgerüstmoduls maximal der Höhe von zwei Betonfertigteilen, vorzugsweise maximal der Höhe eines Betonfertigteils, des Turms entspricht. Die Montage der einzelnen Versorgungsgerüstmodule im Inneren des Windkraftturms ist hierdurch erleichtert.

Bei einem Turm mit einem Versorgungsgerüst ist es vorteilhaft, wenn das Versorgungsgerüst frei in dem Windkraftturm hängt und in seinem Fußbereich lediglich durch eine Lagesicherung in horizontaler Richtung positioniert ist. Das Versorgungsgerüst weist hierzu in seinem Fußbereich eine Lagesicherung auf, mittels welcher es in horizontaler Richtung positionierbar ist. Die Lagesicherung dient dabei lediglich der Schwingungsstabilisierung und ist im Normalbetrieb nicht belastet.

Vorteilhaft bei einem Turm ist es weiterhin, wenn ein Betonfertigteil des Turms, insbesondere ein oberstes Betonfertigteil, welches vorzugsweise als Spannstück oder Übergangsstück eines Hybridturms ausgebildet ist, eine Befestigungsvorrichtung zur hängenden Befestigung des aus den mehreren Versorgungsgerüstmodulen zusammengesetzten Versorgungsgerüsts aufweist. Das sich über die gesamte Höhe des Turms erstreckende Versorgungsgerüst kann hierdurch im Ganzen an dem obersten Betonfertigteil des Turms hängend befestigt werden. Es ist jedoch ebenfalls möglich, das Versorgungsgerüst beispielsweise an dem zweit- oder drittobersten Betonfertigteil zu befestigen und ein oder zwei weitere Versorgungsgerüstmodule in dem oberen Bereich des Versorgungsgerüsts auf dem hängenden Versorgungsgerüst abzustützen. Ein Spannstück oder auch ein Übergangsstück eines Hybridturms ist verstärkt ausgebildet und daher zur Befestigung des Versorgungsgerüsts und zur Aufnahme der durch dieses eingeleiteten Kräfte besonders geeignet.

Nach einer vorteilhaften Ausführung der Erfindung umfasst die Befestigungsvorrichtung mehrere Konsolen, welche an dem Betonfertigteil befestigt sind. Insbesondere ist es vorteilhaft, wenn die mehreren Konsolen mittels eingegossener Gewindehülsen oder -bolzen an dem Betonfertigteil verschraubt sind. Hierdurch wird eine einfache Befestigung des Versorgungsgerüsts an dem Betonfertigteil ermöglicht und zugleich eine gute Krafteinleitung in das Betonfertigteil bewerkstelligt. Die eingegossenen Gewindehülsen oder - bolzen sind hierzu mit entsprechenden Bewehrungen verbunden.

Nach einer vorteilhaften Weiterbildung umfasst die Befestigungsvorrichtung weiterhin wenigstens zwei Streben, welche jeweils zwei Konsolen miteinander verbinden und welche hierdurch auch eine Befestigung verschieden großer Versorgungsgerüste sowie eine Befestigung des Versorgungsgerüsts an verschiedenen Stellen innerhalb des Turmquerschnitts ermöglichen. Die Flexibilität eines erfindungsgemäßen Turms wird hierdurch erhöht.

Bei einem Verfahren zum Errichten eines Versorgungsgerüsts im Inneren eines Turms ist es besonders vorteilhaft, wenn das aus den mehreren Versorgungsgerüstmodulen zusammengesetzte Versorgungsgerüst an einem Spannstück, insbesondere an einem Übergangsstück des Hybridturms befestigt wird.

Zum Errichten des Versorgungsgerüsts ist es weiterhin vorteilhaft, wenn zunächst der Turm aus den Betonfertigteilen fertig aufgebaut wird, anschließend das Spannstück oder das Übergangsstück aufgesetzt wird und der Turm mit Spanngliedern verspannt wird. Schließlich wird eine vorzugsweise temporäre Hubvorrichtung auf dem Spannstück oder dem Übergangsstück abgestützt, mittels welcher das Versorgungsgerüst in dem Turm aufgebaut wird. Dabei wird ein Versorgungsgerüstmodul jeweils von unten mit dem darüber angeordneten Versorgungsgerüstmodul verbunden. Da das Versorgungsgerüst erst nach Fertigstellung des Turms errichtet wird, können sämtliche im Turminneren erforderlichen Arbeiten, wie beispielsweise das Festlegen und Spannen der Spannglieder, ungehindert durchgeführt werden. Ein außerhalb des Turms stehender Kran ist für die Montage des Versorgungsgerüsts nicht erforderlich.

Nach einer ersten Ausführung der Erfindung wird dabei ein erstes Versorgungsgerüstmodul aus mehreren Modulbauteilen und zumindest einem Teil der Turminneneinbauten im Inneren des Turms zusammengebaut, mittels der Hubvorrichtung um etwa die Höhe eines Versorgungsgerüstmoduls angehoben und anschließend ein weiteres Versorgungsgerüstmodul im Inneren des Turms aus den mehreren Modulbauteilen zusammengebaut. Schließlich wird das weitere Versorgungsgerüstmodul mit dem ersten Versorgungsgerüstmodul verbunden und die miteinander verbundenen Versorgungsgerüstmodule werden erneut um etwa die Höhe eines Versorgungsgerüstmoduls angehoben. Vorteilhaft dabei ist es, dass die Versorgungsgerüstmodule stets in derselben Weise aus den mehreren Modulbauteilen an einem festen Montageplatz auf dem Boden des Turms zusammengebaut werden können und das Versorgungsgerüstmodul stets in der gleichen Position mit dem jeweils darüber angeordneten Versorgungsgerüstmodul verbunden werden kann.

In analoger Weise werden weitere Versorgungsgerüstmodule zusammengebaut und mit dem jeweils darüber angeordneten Versorgungsgerüstmodul verbunden. Nach der Montage des untersten Versorgungsgerüstmoduls wird schließlich das gesamte Versorgungsgerüst an der Befestigungsvorrichtung hängend befestigt. Es ist somit lediglich zur Befestigung des Versorgungsgerüsts an der Befestigungsvorrichtung erforderlich, dass Montagepersonen bis auf die Höhe der Befestigungsvorrichtung steigen.

Nach einer zweiten Ausführung der Erfindung wird ein erstes Versorgungsgerüstmodul aus mehreren Modulbauteilen und zumindest einem Teil der Turminneneinbauten im Inneren des Windkraftturms zusammengebaut, mittels der Hubvorrichtung bis zu dem oberen Betonfertigteil angehoben und an der Befestigungsvorrichtung hängend befestigt. Vorteilhaft dabei ist es, dass das Versorgungsgerüst von Anfang an in seiner späteren Einbauposition an der Befestigungsvorrichtung befestigt ist und von oben nach unten hin zusammengebaut wird. Der Platz direkt oberhalb der Spannkellerdecke des Turms bleibt dabei für die Montage der einzelnen Versorgungsgerüstmodule aus den Eckstielen, den Querstreben und Diagonalversteifungen frei zugänglich.

Anschließend wird ein weiteres Versorgungsgerüstmodul aus mehreren Modulbauteilen und zumindest einem Teil der Turminneneinbauten im Inneren des Windkraftturms zusammenbaut, mittels der Hubvorrichtung bis an ein unterstes Ende des ersten Versorgungsgerüstmoduls angehoben und montiert. In analoger Weise werden weitere Versorgungsgerüstmodule zusammengebaut, angehoben und montiert, wobei sie jeweils mit ihrem oberen Ende mit einem unteren Ende des darüber angeordneten Versorgungsgerüstmoduls verbunden werden.

Nach Montage des untersten Versorgungsgerüstmoduls und nach Befestigung des Versorgungsgerüsts an der Befestigungsvorrichtung ist es vorteilhaft, wenn in einem Fußbereich des Versorgungsgerüsts eine Lagesicherung zwischen dem Versorgungsgerüst und einem Fundament des Turms angeordnet wird.

Ebenso ist es vorteilhaft, wenn Leistungskabel und/oder Versorgungskabel erst nach der Befestigung des Versorgungsgerüsts an der Befestigungsvorrichtung einzeln und im Ganzen bis auf die Höhe der Befestigungsvorrichtung und/oder des Adapterstücks gezogen werden oder auch von oben nach unten herabgelassen werden. Die Kabel können hierdurch zusammenhängend und ohne ungünstige Kupplungen verlegt werden. Alternativ dazu ist es jedoch ebenso möglich, die Kabel bei einer Montage des Turms nach der ersten Ausführung mit dem nach schrittweise errichteten und angehobenen Versorgungsgerüst ebenfalls schrittweise mit nach oben zu führen.

Weiterhin ist es vorteilhaft, wenn nach Fertigstellung des Turms wenigstens ein rohrförmiges Stahlsegment auf dem Turm montiert wird, wobei ein oder mehrere Versorgungsgerüstmodule in dem Stahlsegment vormontiert und befestigt sind. Die Versorgungsgerüstmodule entsprechen dabei den Versorgungsgerüstmodulen in dem Turm oder sind mit diesen zumindest kompatibel, so dass ein durchgehendes Gerüst in dem gesamten Turm samt Stahlsegmenten erstellt wird.

Weitere Vorteile werden anhand der nachfolgend dargestellten Ausführungsbeispiele beschrieben. Es zeigen:
- **Figur 1**: einen erfindungsgemäßen Turm in einer perspektivischen Übersichtsdarstellung,
- **Figur 2**: eine Befestigungsvorrichtung für ein Versorgungsgerüst in einer schematischen Schnittdarstellung,
- **Figur 3**: eine Draufsicht auf ein erfindungsgemäßes Versorgungsgerüst sowie die Befestigungsvorrichtung zur Befestigung des Versorgungsgerüsts,
- **Figur 4**: ein Versorgungsgerüstmodul eines Versorgungsgerüsts in einer perspektivischen Darstellung,
- **Figur 5**: eine Draufsicht auf eine Befestigungsvorrichtung für ein Versorgungsgerüst in einer alternativen Ausführung,
- **Figur 6**: ein Verfahren zum Errichten eines Versorgungsgerüsts anhand einer schematischen Schnittdarstellung eines Turms,
- **Figur 7**: ein alternatives Verfahren zum Errichten eines Versorgungsgerüsts,
- **Figur 8**: eine Lagesicherung für ein erfindungsgemäßes Versorgungsgerüst in einer schematischen Schnittdarstellung,
- **Figur 9**: eine alternative Ausführung einer Lagesicherung in einer schematischen Draufsicht, sowie
- **Figur 10**: ein Detail einer schematischen Schnittdarstellung mit an einem Versorgungsgerüst angeordneten Abstandshaltern.

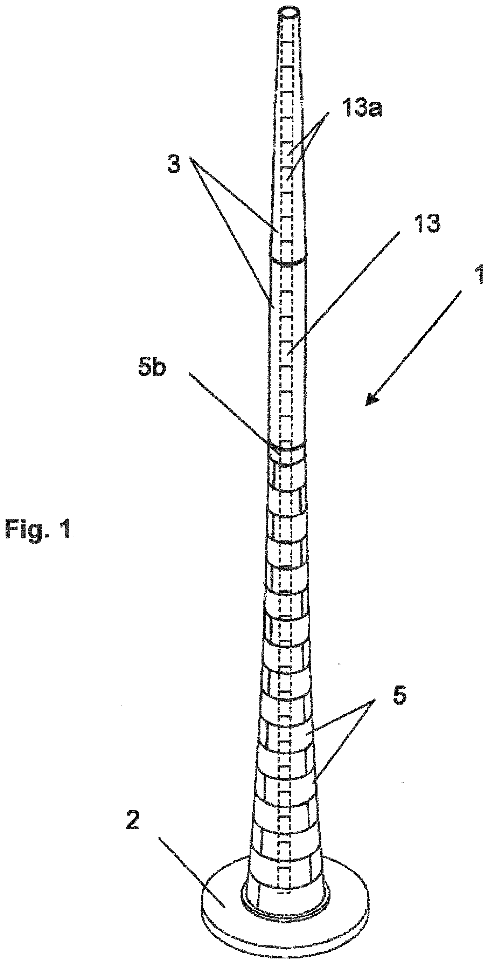

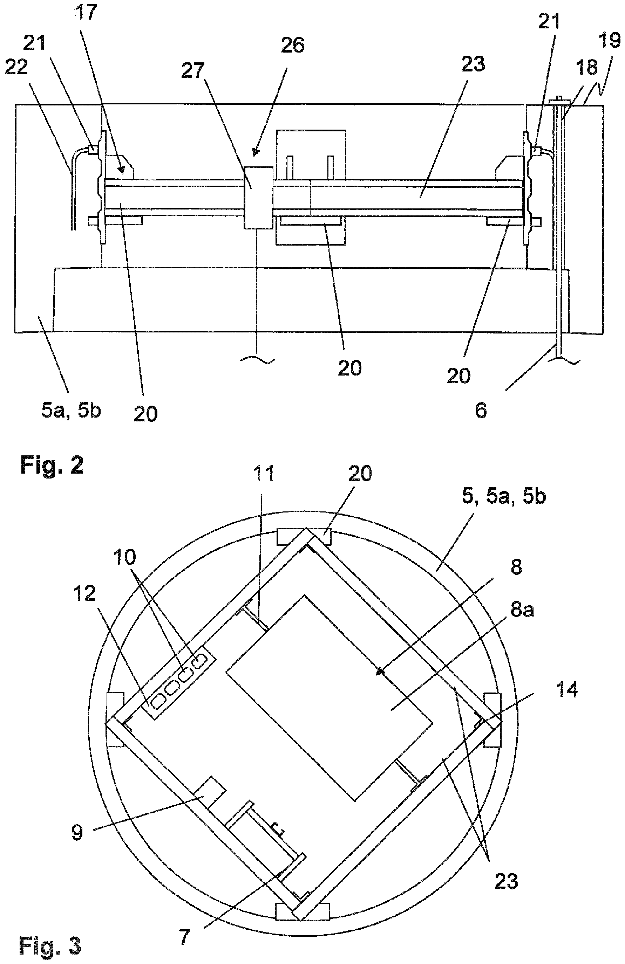

Figur 1 zeigt einen erfindungsgemäßen Turm 1, welcher vorliegend als Windkraftturm ausgeführt ist, in einer perspektivischen Übersichtsdarstellung. Der Turm 1 besteht aus ringsegmentförmigen Betonfertigteilen 5, welche jeweils zu Betonringen zusammengesetzt werden und auf einem Fundament 2 des Turms 1 übereinander angeordnet werden. Der Turm ist nach vorliegender Darstellung als Hybridturm ausgebildet und weist zusätzlich oberhalb der Betonfertigteile 5 rohrförmige Stahlsegmente 3 auf, welche auf einem Übergangsstück 5b angeordnet sind. Das Übergangsstück 5b dient dabei sowohl der Verbindung der Stahlsegmente 3 mit den Betonfertigteilen 5 und zugleich der Festlegung von Spanngliedern 6 (siehe Figur 2), mittels welcher die Betonfertigteile miteinander verbunden sind und auf dem Fundament 2 befestigt sind und mittels welcher eine Vorspannung auf den Turmabschnitt aus Betonfertigteilen 5 aufbringbar ist. Das Übergangsstück 5b ist ebenfalls als Betonfertigteil ausgeführt, kann jedoch auch eine Flanschfläche 19 (s. Figur 2) oder eine Ummantelung aus Stahl aufweisen. Im Inneren des Turms 1 ist ein Versorgungsgerüst 13 zur Befestigung von Inneneinbauteilen 7, 8, 9, 10, 11, 12 (s. Figuren 3, 6 und 7) angeordnet, welches hier lediglich schematisch in gestrichelter Darstellung gezeigt ist.

Die Inneneinbauten umfassen dabei Komponenten für den laufenden Betrieb, ebenso wie Komponenten für Montage- und Wartungszwecken. Bei einem Windkraftturm sind beispielsweise eine aus mehreren Leitermodulen 7a gebildete Leiter 7, eine Liftanordnung 8 mit einer Liftkabine 8a sowie Hubund Führungsseilen oder auch Führungsschienen, Seilführungen 11, Beleuchtungseinheiten 9 samt der zugehörigen Versorgungsleitungen, sowie verschiedenen Kabelanordnungen 10 mit Leistungskabeln, Steuerungskabeln und Versorgungskabeln sowie Kabelbefestigungen 12 vorgesehen. Weiterhin können Montage- und Wartungsplattformen (nicht dargestellt) vorgesehen werden. Die Inneneinbauten 7, 8, 9, 10, 11 und 12 sind in den Figuren 3 sowie 6 und 7 erkennbar und im Inneren 25 des Versorgungsgerüsts 13 angeordnet, von welchem in Figur 3 lediglich die Eckstiele 14 eines obersten Versorgungsgerüstmoduls sichtbar sind.

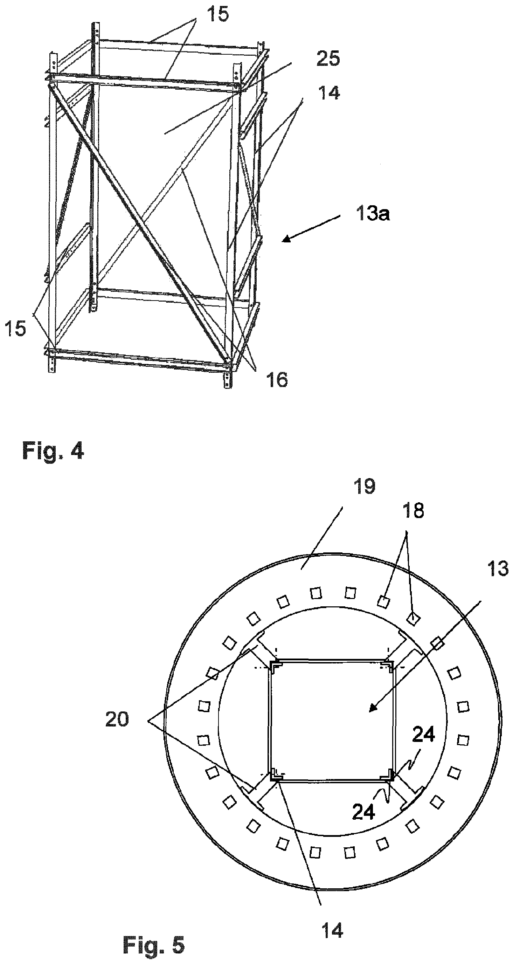

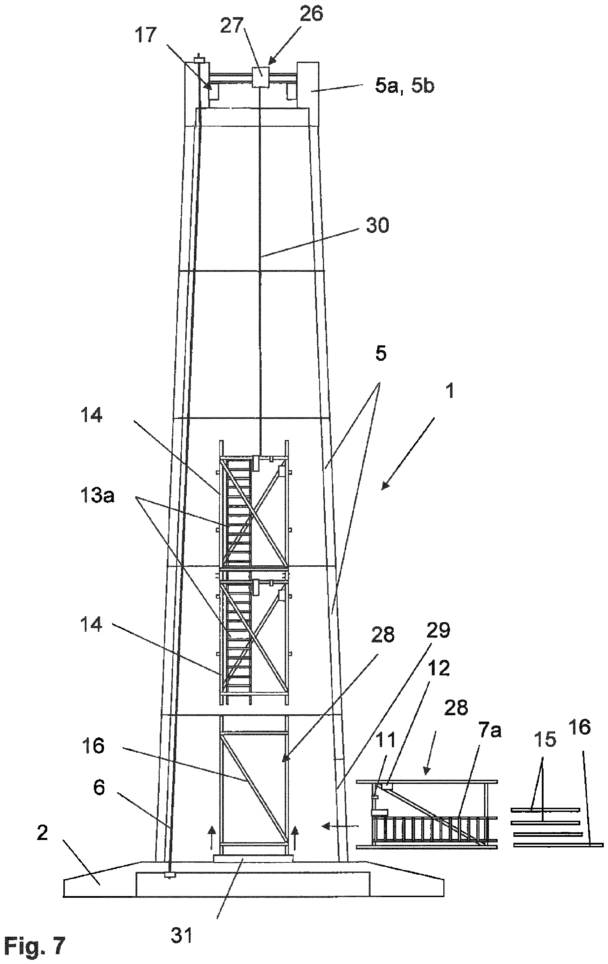

Nach der vorliegenden Erfindung ist nun vorgesehen, dass das Versorgungsgerüst 13 aus mehreren Versorgungsgerüstmodulen 13a (siehe Figur 4) zusammengesetzt ist, wobei das aus den mehreren Versorgungsgerüstmodulen 13a zusammengesetzte Versorgungsgerüst 13 eine selbsttragende Einheit bildet, die ausschließlich hängend an dem Turm 1 befestigbar ist. Das gesamte Versorgungsgerüst 13 ist dabei in einfacher und kostengünstiger Weise derart knapp ausgelegt, dass es unter seinem Eigengewicht und unter seiner Nutzlast nicht knickstabil ist. Es erhält seine Stabilität für die Kräfte aus dem Betrieb erst dadurch, dass es durch sein Eigengewicht und die Nutzlasten durch Zugkräfte belastet ist. Das Versorgungsgerüst 13 bzw. jedes einzelne Versorgungsgerüstmodul 13a weist dabei eine fachwerkartige Gitterstruktur auf und besteht aus mehreren einfachen Modulbauteilen, wie Eckstielen 14, Querstreben 15 sowie Diagonalversteifungen 16, welche aufgrund ihrer geringen Abmessungen in einfacher Weise gehandhabt und miteinander montiert werden können. Die einzelnen Versorgungsgerüstmodule 13a sind dabei fest miteinander verbunden, wie durch die strichpunktierten Linien zwischen den beiden Modulbauteilen 13a in Figur 7 angedeutet. Vorzugsweise werden die einzelnen Versorgungsgerüstmodule 13a an den jeweils oberen Enden ihrer Eckstiele 14 mit den jeweils unteren Enden der Eckstiele 14 des darüber liegenden Versorgungsgerüstmoduls 13a verschraubt. Die Versorgungsgerüstmodule 13a können dabei direkt miteinander verschraubt werden oder mittels jeweils zwischen zwei Versorgungsgerüstmodulen 13a angeordneten Verbindern.

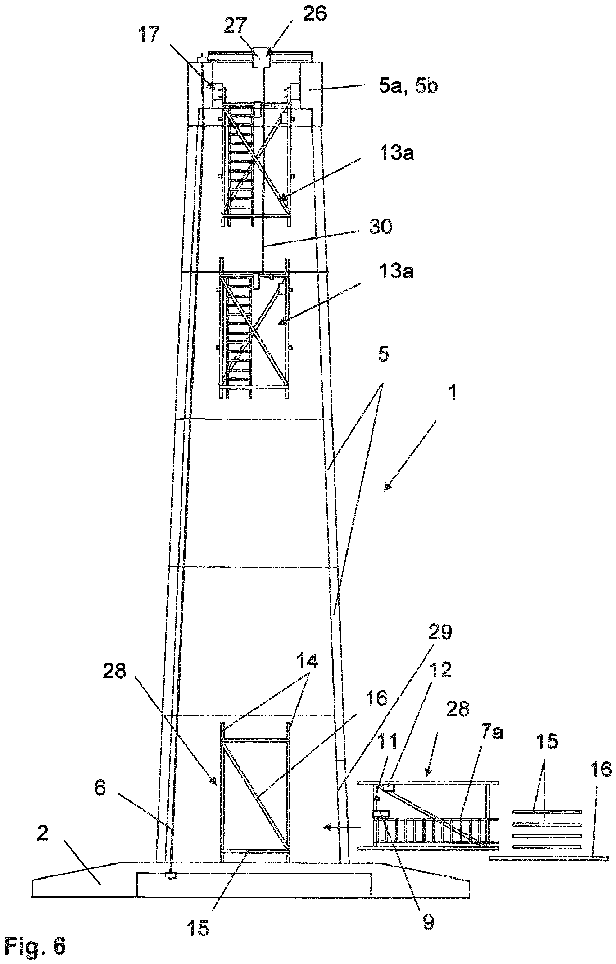

Um das Versorgungsgerüst 13 an dem Turm 1 stabil zu befestigen, ist eine Befestigungsvorrichtung 17 an einem der oberen Betonfertigteile 5 vorgesehen. Nach den in Figur 6 und 7 gezeigten Darstellungen ist dabei das gesamte Versorgungsgerüst 13 an dem obersten Betonfertigteil 5 des Turms 1 befestigt, welches ein Spannstück 5a zur Verankerung von Spanngliedern 6 ist. Werden auf den Betonfertigteile 5 noch Stahlsegmente 3 angeordnet, so ist das Spannstück 5a als Übergangstück 5b ausgeführt, welches zusätzlich noch die Befestigung der Stahlsegmente 3 ermöglicht.

Eine schematische Schnittdarstellung eines derartigen Spannstücks 5a mit einer Befestigungsvorrichtung 17 ist in Figur 2 gezeigt. Das Spannstück 5a weist über seinen Umfang verteilt eine Vielzahl von Durchgangsöffnungen 18 auf, durch welche in an sich bekannter Weise Spannglieder 6 hindurchführbar sind und auf einer oberen Flanschfläche 19 des Spannstücks 5a festlegbar sind. Die Befestigungsvorrichtung 17 umfasst nach der gezeigten Ausführung mehrere Konsolen 20, welche über den Innenumfang des Spannstücks verteilt sind. Die Konsolen 20 sind dabei in eingegossenen Gewindehülsen 21 mit dem Spannstück 5a verschraubt. Die Gewindehülsen 21 können dabei mit Bewehrungen 22 verbunden sein, so dass die Konsolen 20 stabil befestigt werden können und die Lastabtragung in dem Turm 1 gewährleistet ist. Ebenso können anstelle der hier gezeigten Gewindehülsen 21 Gewindebolzen eingegossen sein. Vorliegend ist die Befestigungsvorrichtung 17 am Beispiel eines Spannstücks 5a gezeigt, ein einfaches Betonfertigteil 5 oder ein Übergangsstück 5b kann jedoch ebenso mit einer derartigen Befestigungsvorrichtung versehen sein. Vorteilhaft bei derartigen eingegossenen Gewindehülsen 21 ist es, dass diese auch für andere Zwecke genutzt werden können. So kann mittels der eingegossenen Gewindehülsen 21 ein Betonfertigteil 5, 5a, 5b beispielsweise bereits während seiner Herstellung auf eine Haltevorrichtung aufgespannt und bearbeitet werden, beispielsweise können die Stirnflächen der Betonfertigteile 5, 5a, 5b überschliffen werden. Ebenso ist es möglich, vor oder während der Montage des Betonfertigteils 5, 5a, 5b temporäre Hilfsvorrichtungen, wie Leitern, an den Gewindehülsen 21 befestigt werden.

Figur 3 zeigt eine Draufsicht auf ein Betonfertigteil 5, 5a, 5b mit einer daran angeordneten Befestigungsvorrichtung 17, wie in Figur 2 gezeigt. Die Befestigungsvorrichtung 17 umfasst nach der gezeigten Ausführung weiterhin Streben 23, vorliegend vier Streben 23, welche auf den Konsolen 20 aufgelagert sind. Von dem Versorgungsgerüst 13 sind nach der vorliegenden Darstellung lediglich die Eckstiele 14 erkennbar, welche jeweils zwischen zwei Streben 23 befestigt sind. Die Befestigungen, insbesondere Verschraubungen, sind durch strichpunktierte Linien symbolisiert. Vorteilhaft bei dieser Ausführung ist es, dass aufgrund der Befestigung des Versorgungsgerüsts 13 an Streben 23 auch Versorgungsgerüste 13 unterschiedlicher Abmessungen befestigt werden können. Es ist dabei abweichend von der gezeigten Ausführung auch möglich, dass lediglich zwei Streben 23 parallel zueinander auf Konsolen 20 aufgelagert sind, wobei die Streben 23 jeweils zwei Konsolen 20 miteinander verbinden. Weitere Streben 23 können dann quer zu den ersten Streben 23 in einem beliebigen Abstand zueinander angeordnet werden und mit den ersten Streben 23 verbunden werden, beispielsweise auch auf den ersten Streben 23 aufgelagert werden.

Eine alternative Ausführung einer Befestigungsvorrichtung 17 ist in einer schematischen Draufsicht in Figur 5 gezeigt. Die Befestigungsvorrichtung 17 umfasst dabei Konsolen 20, welche Anlageflächen 24 für eine direkte Befestigung der Eckstiele 14 des Versorgungsgerüsts 13 aufweisen.

In Figur 3 ist weiterhin die Anordnung der Turminneneinbauten 7, 8, 9, 10, 11, 12 an dem Versorgungsgerüst 13 erkennbar. Aufgrund der knappen Auslegung des Versorgungsgerüsts 13 in Bezug auf die Knickstabilität sowie der einfachen, fachwerkartigen Gitterstruktur ist es möglich, das erfindungsgemäße Versorgungsgerüst 13 mit vergleichsweise großen Abmessungen auszuführen, ohne dass hierdurch die Herstellungskosten unangemessen erhöht werden. Das Versorgungsgerüst 13 weist daher einen vergleichsweise großen Innenraum auf, welcher in besonders vorteilhafter Weise die Anordnung sämtlicher Turminneneinbauten 7, 8, 9, 10, 11, 12 in dem Innenraum 25 ermöglicht, in welchem sie geschützt und dennoch gut zugänglich sind. Ebenso sind hierdurch auch die weiteren im Inneren des Turms 1 angeordneten Komponenten der Windkraftanlage sowie die Spannglieder 6 gut zugänglich. Die Liftanordnug 8 und die Leiter 7 sind dabei in dem Innenraum 25 derart nebeneinander oder einander gegenüberliegend angeordnet, dass die Leiter 7 von der Liftkabine 8a aus jederzeit betretbar ist, so dass über die gesamte Höhe des Versorgungsgerüsts 13 ein Fluchtweg zur Verfügung steht.

Wie der Figur 3 oder auch der Figur 4 weiterhin entnehmbar, umschließt die fachwerkartige Gitterstruktur des Versorgungsgerüsts 13 bzw. eines jeden Versorgungsgerüstsmoduls 13a den Innenraum 25 vollständig, so dass durch das elektrisch leitfähige Versorgungsgerüst 13 zugleich eine Erdung bereitgestellt wird. Die Turminneneinbauten 7, 8, 9, 10, 11, 12 sind durch die Anordnung an dem Versorgungsgerüst 13 zugleich über dieses geerdet.

Figur 6 zeigt nun ein Verfahren zur Montage des Versorgungsgerüsts 13 im Inneren des Turms 1. Dabei werden zunächst die Betonfertigteile 5 auf dem Fundament 2 übereinander angeordnet, bis nach Erreichen der gewünschten Bauhöhe des Turms 1 das Spannstück 5a oder ein Übergangsstück 5b auf die übereinander angeordneten Betonfertigteile 5 gesetzt wird. Die Befestigungsvorrichtung 17, welche beispielsweise Konsolen 20 beinhaltet, ist dabei bereits an dem Spannstück 5a vormontiert. Anschließend werden in an sich bekannter Weise die Spannglieder 6 eingezogen, festgelegt und verspannt, so dass der Turm 1 nun bereits unter Vorspannung steht und dadurch stabil steht und auf dem Fundament 2 befestigt ist. Mittels eines Krans (nicht dargestellt), welcher zur Montage der Betonfertigteile 5 des Turms 1 ohnehin zur Verfügung steht, kann dann eine temporäre Hubvorrichtung 26 auf dem obersten Betonfertigteil 5, vorliegend dem Spannstück 5a, abgestützt werden. Die Hubvorrichtung 26 kann dabei, wie vorliegend dargestellt, lediglich eine Traverse mit einer Winde 27 umfassen, oder die Hubvorrichtung 26 kann weitere Funktionen, wie einen Witterungsschutz für das Innere des Turms 1, beinhalten.

Vorliegend ist die Traverse der Hubvorrichtung 26 auf dem obersten Betonfertigteil 5 bzw. dem Übergangsstück 5b oder Spannstück 5a aufgelegt. Ebenso kann eine Hubvorrichtung 26 jedoch auch an einer der Streben 23 (s. Figur 3) befestigt werden, welche der Befestigung des Versorgungsgerüsts 13 und/oder der Ausnahme einer Plattform (nicht gezeigt) dienen. Die Winde 27 kann dabei auch direkt an einer der Streben 23 befestigt werden, wie dies in Figur 7 dargestellt ist. Nach einer nicht gezeigten Ausführung kann die Winde 27 auch im Bodenbereich angeordnet sein. In diesem Fall umfasst die Hubvorrichtung 26 eine Umlenkrolle, welche an den Konsolen 17, an Streben 23 oder auch an einer separaten Traverse angebracht ist.

Nachdem die temporäre Hubvorrichtung 26 aufgesetzt ist, kann mit der Montage des Versorgungsgerüsts 13 aus den einzelnen Versorgungsgerüstmodulen 13a begonnen werden. Nach der vorliegend gezeigten Darstellung sind dabei einzelne Seitenwände 28, welche jeweils aus zwei Eckstielen 14, wenigstens zwei Querstreben 15 und gegebenenfalls auch einer Diagonalversteifung 16 bestehen, bereits außerhalb des Turms 1 zusammengesetzt worden. Die vormontierten Seitenwände 28 sowie weitere Modulbauteile 14, 15, 16 können aufgrund ihrer noch geringen Abmessungen auch durch eine verhältnismäßig kleine Öffnung 29 im Fußbereich des Turms 1 in das Innere des Turms 1 eingebracht werden. Je nach Größe des Versorgungsgerüstmoduls 13a ist es jedoch auch möglich, dieses außerhalb des Turms 1 komplett vorzumontieren und durch die Öffnung 29 in den Innenraum des Turms 1 einzubringen, oder aber lediglich die Modulbauteile 14, 15, 16 sowie die Inneneinbauten 7, 8, 9, 10, 11, 12 in den Innenraum des Turms 1 einzubringen und die gesamten Versorgungsgerüstmodule 13a dort zu montieren. Besonders vorteilhaft ist es jedoch, wenn zumindest einzelne Seitenwände 28 bereits vormontiert sind, da an diesen dann auch zumindest ein Teil der Inneneinbauten 7, 8, 9, 10, 11, 12 bereits vormontiert werden kann.

Vorliegend sind ein Leitermodul 7a, eine Beleuchtungseinheit 9, Seilführungen 11 sowie Kabelbefestigungen 12 bereits an einzelnen Modulbauteilen 14, 15, 16 oder vormontierten Seitenwänden 28 vormontiert. Nach dem Einheben der Seitenwände 28 und gegebenenfalls weiterer Modulbauteile 14, 15, 16 wird das Versorgungsgerüstmodul 13a auf dem Boden des Fundaments 2 zusammengebaut. Nachdem das erste Versorgungsgerüstmodul 13a zusammengebaut ist, wird es an einem Seil 30 der Hubvorrichtung 26 befestigt und bis auf die Höhe der Befestigungsvorrichtung 17 angehoben.

Dort wird es bereits in seiner Endlage montiert, beispielsweise mittels Schrauben (gestrichelte Linien) befestigt. Anschließend oder auch bereits während des Anhebens des ersten Versorgungsgerüstmoduls 13a können bereits die Seitenwände 28 und/oder die Modulbauteile 14, 15, 16 des zweiten Versorgungsgerüstmoduls 13a in das Innere des Turms 1 eingebracht werden und auf dem Boden des Fundaments 2 zusammengebaut werden. Nach dem Zusammensetzen des zweiten Versorgungsgerüstmoduls 13a wird dieses wiederum mittels der Hubvorrichtung 26 angehoben und mit seinem oberen Ende mit dem unteren Ende des ersten Versorgungsgerüsts 13a verbunden. Ebenso werden die folgenden Versorgungsgerüstmodule 13a auf dem Boden des Fundaments 2 zusammengesetzt, mittels der Hubvorrichtung 26 jeweils bis auf die Höhe des letzten bereits montierten Versorgungsgerüstmoduls 13a angehoben und mit diesem verbunden. Zur Montage der Versorgungsgerüstmodule 13a können dabei Montagepersonen jeweils mit den zu montierenden Versorgungsgerüstmodulen 13a nach oben fahren und mit der Hubvorrichtung 26 wieder herabgelassen werden. Die Hubvorrichtung 26 und/oder das Versorgungsgerüstmodul 13a kann hierzu beispielsweise eine temporäre Plattform aufweisen. Ebenso können Montagepersonen jedoch auch jeweils am Montageort verbleiben und mit dem zunehmenden Aufbau des Versorgungsgerüsts 13 von oben nach unten jeweils über die nach unten hin ebenfalls wachsende Leiter 7 nach unten an die nächste Montageposition gelangen.

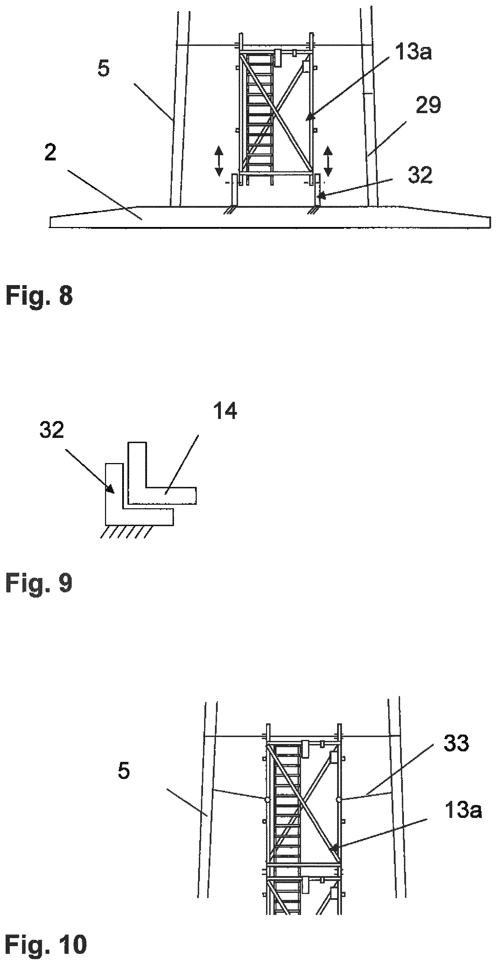

Nach einem alternativen Verfahren, welches in Figur 7 dargestellt ist, kann jedoch auch vorgesehen werden, dass das erste Versorgungsgerüstmodul 13a nach dem Zusammensetzen auf dem Boden des Fundaments 2 lediglich etwa um die Höhe eines Versorgungsgerüstmoduls 13a angehoben wird und an der temporären Hubvorrichtung 26 hängend verbleibt. Bezüglich der Anordnung und Befestigung der Winde 27 der Hubvorrichtung 26 sind dabei wiederum die bereits bei Figur 6 beschriebenen Alternativen denkbar. Anschließend wird das folgende Versorgungsgerüstmodul 13a wiederum auf dem Boden des Fundaments 2 zusammengebaut und mit seinem oberen Ende mit dem unteren Ende des Versorgungsgerüstmoduls 13a, welches von der Hubvorrichtung 26 gehalten wird, verbunden. Um das Verbinden der Versorgungsgerüstmodule zu erleichtern, kann dabei auf dem Boden des Fundaments 2 auch eine Hubplattform 31 vorgesehen sein, mittels welcher das zu montierende Versorgungsgerüstmodul 13a bis auf die Höhe der bereits montierten Versorgungsgerüstmodule 13a angehoben werden kann. In analoger Weise werden weitere Versorgungsgerüstmodule 13a jeweils auf dem Fundamentboden bzw. auf der Hubplattform 31 zusammengesetzt und mit dem unteren Ende des darüber angeordneten Versorgungsgerüstmoduls 13a verbunden, wobei jeweils die bereits miteinander montierten Versorgungsgerüstmodule 13a schrittweise jeweils um die Höhe eines Versorgungsgerüstmoduls 13a mittels der Hubvorrichtung 26 angehoben werden. Nach der Montage des untersten Versorgungsgerüstmoduls 13a, wobei gegebenenfalls auch eine Lagesicherung 32 (vgl. Figur 8) zumindest teilweise bereits montiert werden kann, wird schließlich mittels der Hubvorrichtung 26 das gesamte Versorgungsgerüst 13 exakt auf die Höhe der Befestigungsvorrichtung 17 gehoben und dort befestigt.

Vorteilhaft bei dieser Ausführung ist es, dass sämtliche Arbeiten bis zur Fertigstellung des Versorgungsgerüstes 13 in stets derselben Weise auf dem Boden des Fundaments 2 verrichtet werden können und lediglich zum Befestigen des gesamten Versorgungsgerüsts 13 an der Befestigungsvorrichtung 17 Montagepersonen bis auf die Höhe der Befestigungsvorrichtung 17 gebracht werden müssen. Es liegt jedoch auch im Rahmen der Erfindung, eine Mischung aus den beiden beschriebenen Errichtungsverfahren anzuwenden.

Ist das Versorgungsgerüst 13 an der Befestigungsvorrichtung 17 befestigt und das letzte Versorgungsgerüstmodul 13a montiert, kann die temporäre Hubvorrichtung 26 abgebaut werden. Das Versorgungsgerüst 13 hängt nun frei an der Befestigungsvorrichtung 17 und wird in seinem Fußbereich, wie in Figur 8 dargestellt, lediglich mittels einer Lagesicherung 32 in horizontaler Richtung gegenüber dem Turm 1 positioniert. Die Lagesicherung 32 kann dabei, wie in Figur 8 durch die strichpunktierten Linien angedeutet, eine vertikal verschiebliche Verbindung zu dem untersten Versorgungsgerüstmodul 13a beinhalten, oder, wie in Figur 9 dargestellt, lediglich einen Eckstiel 14 des untersten Versorgungsgerüstmoduls 13a ohne eine Verbindung dazu umgreifen. Wie in Figur 8 ersichtlich, ist dabei das Versorgungsgerüst 13 etwas kürzer als der Turm 1 ausgeführt, so dass es auch bei unterschiedlichen Längenausdehnungen des Turms 1 und des Versorgungsgerüsts 13 und durch Schwingen des Turms 1 nicht zu einer Druckbelastung und einem Ausknicken des Versorgungsgerüsts 13 kommen kann.

Je nach Höhe des Turms 1 sowie des Versorgungsgerüsts 13 kann es weiterhin vorteilhaft sein, das Versorgungsgerüst 13 mittels gelenkig gelagerter Abstandshalter 33 in horizontaler Richtung gegenüber der Turminnenwandung zu positionieren, wie schematisch in Figur 10 dargestellt. Vorzugsweise werden dabei zwischen der Lagesicherung 32 im Fußbereich des Versorgungsgerüsts 13 sowie der Befestigungsvorrichtung 17 im Kopfbereich des Versorgungsgerüsts 13 in regelmäßigen Abständen gelenkig gelagerte Abstandshalter 33 angeordnet, beispielsweise in Abständen von jeweils 20 Metern. Aufgrund der gelenkigen Lagerung der Abstandshalter ist dabei eine korrekte Positionierung des Versorgungsgerüsts 13 auch nach Verschiebungen des Versorgungsgerüsts 13 gegenüber dem Turm 1 in Längsrichtung noch gesichert. Ebenso wie die Lagesicherung 32 im Fußbereich, dienen die Abstandshalter 33 dabei lediglich der Sicherung der Position des Versorgungsgerüsts 13 bei Schwingungen, beispielsweise durch Windkräfte oder Rotoranregung, und sind im Normalbetrieb unbelastet.

Ist der Turm 1 ein Hybridturm einer Windkraftanlage, so wird zunächst der Turm 1 mit dem Versorgungsgerüst 13, wie in Figur 6 oder Figur 7 beschrieben, aufgebaut und ein Übergangsstück 5b aufgesetzt. Nach der Montage des Versorgungsgerüsts 13 werden dann noch Stahlsegmente 3 (siehe Figur 1) auf dem Übergangsstück 5b montiert. Die Stahlsegmente 3 sind in ihrem Inneren ebenfalls mit Versorgungsgerüstmodulen 13a versehen, welche mit den Versorgungsgerüstmodulen 13a des Betonabschnitts zumindest kompatibel sind. Vorzugsweise sind dabei die Versorgungsgerüstmodule 13a bereits in den Stahlsegmenten 3 vormontiert und dort in an sich bekannter Weise, beispielsweise durch Verschrauben, Verschweißen mittels Magnetbefestigung oder Einhängungen, an Konsolen 20 oder Flanschen befestigt.

Vorteilhaft ist es bei dem erfindungsgemäßen Versorgungsgerüst 13 sowie dem erfindungsgemäßen Verfahren zum Errichten eines Versorgungsgerüsts 13, dass Turminneneinbauten 7, 8, 9, 11, 12 bereits an den Versorgungsgerüstmodulen 13a vormontiert werden können und nach Montage des Versorgungsgerüsts 13 die Kabelanordnungen 1 einzeln oder im Ganzen nach oben gezogen werden können, oder auch von oben durchgehend bis nach unten herabgelassen werden können. Ebenso kann aufgrund der Montage der einzelnen Versorgungsgerüstmodule 13a mittels der Hubvorrichtung 26 sowie der bereits vormontierten Leitermodule 7a die Montage nahezu ohne aufwändige Seilkletterarbeiten erfolgen.

Die Erfindung ist nicht auf die dargestellten Ausführungsbeispiele beschränkt. So ist nach den vorliegend gezeigten Ausführungsbeispielen die Höhe eines Versorgungsgerüstmoduls 13a im Wesentlichen so groß wie die Höhe eines Betonfertigteils 5 bzw. nur geringfügig kleiner. Weiterhin sind alle Versorgungsgerüstmodule 13a als Gleichteile dargestellt. Um eine Anpassung an das oftmals mit besonderen Abmessungen ausgeführte Spannstück 5a oder Übergangsstück 5b oder auch an ein abweichendes Fußelement eines Betonfertigteils 5 zu erreichen, können jedoch auch Versorgungsgerüstmodule 13a unterschiedlicher Höhe und/oder unterschiedlicher Bauformen bereitgestellt werden, welche jedoch hinsichtlich der Befestigung und der einzelnen Leitermodule 7a zueinander kompatibel sind.

Weitere Abwandlungen und Kombinationen im Rahmen der Patentansprüche fallen ebenfalls unter die Erfindung.

### Bezugszeichenliste

- 1: Turm
- 2: Fundament
- 3: Stahlsegment
- 5: Betonfertigteil
- 5a: Spannstück
- 5b: Übergangsstück
- 6: Spannglied
- 7: Leiter
- 7a: Leitermodul
- 8: Liftanordnung
- 8a: Liftkabine
- 9: Beleuchtungseinheit
- 10: Kabelanordnung
- 11: Seilführung
- 12: Kabelklemmleiste
- 13: Versorgungsgerüst
- 13a: Versorgungsgerüstmodul
- 14: Eckstiel
- 15: Querstrebe
- 16: Diagonalversteifung
- 17: Befestigungsvorrichtung
- 18: Durchgangsöffnung
- 19: Flanschfläche
- 20: Konsole
- 21: Gewindehülse
- 22: Bewehrung
- 23: Strebe
- 24: Anlagefläche
- 25: Innenraum
- 26: Hubvorrichtung
- 27: Winde
- 28: Seitenwand
- 29: Öffnung
- 30: Seil
- 31: Hubplattform
- 32: Lagesicherung
- 33: Abstandshalter

## Patentansprüche

1. Versorgungsgerüst (13) für einen Turm (1), insbesondere einen Windkraftturm aus ringförmigen oder ringsegmentförmigen Betonfertigteilen (5), welches Turminneneinbauten (7, 8, 9, 10, 11, 12), insbesondere eine Leiter (7), eine Liftanordnung (8), Kabelanordnungen (10), Plattformen und Beleuchtungseinheiten (9), trägt und welches im Inneren des Turms (1) anordenbar ist und sich im Wesentlichen über die gesamte Höhe des Turms (1) erstreckt, wobei das Versorgungsgerüst (13) aus mehreren übereinander angeordneten und miteinander verbundenen Versorgungsgerüstmodulen (13a) zusammengesetzt ist, **dadurch gekennzeichnet, dass** das aus den mehreren Versorgungsgerüstmodulen (13a) zusammengesetzte Versorgungsgerüst (13) eine selbsttragende Einheit bildet, welche hängend an einem oberen Betonfertigteil (5, 5a, 5b) des Turms (1) befestigbar ist, wobei das Versorgungsgerüst (13) eine fachwerkartige Gitterstruktur aufweist, welche durch Zugkräfte aus Eigengewicht und Nutzlast stabilisiert ist, wobei die Gitterstruktur unter Eigengewicht und Nutzlast nicht knickstabil ist.

2. Versorgungsgerüst nach dem vorherigen Anspruch, **dadurch gekennzeichnet, dass** zumindest eine Liftanordnung (8) und eine Leiter (7), vorzugsweise sämtliche Turminneneinbauten (7, 8, 9, 10, 11, 12), in einem Innenraum (25) des Versorgungsgerüsts (13) angeordnet sind und dass die fachwerkartige Gitterstruktur des Versorgungsgerüsts (13) vorzugsweise den Innenraum (25) vollständig umschließt.

3. Versorgungsgerüst nach dem vorherigen Anspruch, **dadurch gekennzeichnet, dass** die Liftanordnung (8) und die Leiter (7) in dem Innenraum (25) derart zueinander positioniert sind, dass die Leiter (7) von einer Liftkabine (8a) der Liftanordnung (8) aus betretbar ist.

4. Versorgungsgerüst nach einem der vorherigen Ansprüche, **dadurch gekennzeichnet, dass** zumindest ein Leitermodul (7a) der Leiter (7), eine Beleuchtungseinheit (9), Seilführungen (11) der Liftanordnung (8) und Kabelbefestigungen (12) an den Versorgungsgerüstmodulen (13a) vormontiert sind.

5. Versorgungsgerüst nach einem der vorherigen Ansprüche, **dadurch gekennzeichnet, dass** die Höhe eines Versorgungsgerüstmoduls (13a) höchstens der Höhe zweier Betonfertigteile (5) des Turms (1), insbesondere der Höhe eines Betonfertigteils (5) entspricht.

6. Versorgungsgerüst nach einem der vorherigen Ansprüche, **dadurch gekennzeichnet, dass** das Versorgungsgerüst (13) in seinem Fußbereich eine Lagesicherung (32) zur Positionierung gegenüber dem Turm (1) in horizontaler Richtung aufweist.

7. Turm (1), insbesondere Windkraftturm aus ringförmigen oder ringsegmentförmigen Betonfertigteilen (5), mit einem im Inneren des Turms (1) angeordneten Versorgungsgerüst (13), welches sich im Wesentlichen über die gesamte Höhe des Turms (1) erstreckt und Turminneneinbauten (7, 8, 9, 10, 11, 12), insbesondere eine Leiter (7), eine Liftanordnung (8), Kabelanordnungen (10), Plattformen und Beleuchtungseinheiten (9), trägt und welches aus mehreren übereinander angeordneten und miteinander verbundenen Versorgungsgerüstmodulen (13a) zusammengesetzt ist, **dadurch gekennzeichnet, dass** das Versorgungsgerüst (13) nach einem der Ansprüche 1 - 9 ausgebildet ist.

8. Turm nach dem vorherigen Anspruch, **dadurch gekennzeichnet, dass** ein Betonfertigteil (5) des Turms (1), insbesondere das oberste Betonfertigteil (5) des Turms, insbesondere ein Spannstück (5a) oder ein Übergangsstück (5b) eines Hybridturms, eine Befestigungsvorrichtung (17) zur hängenden Befestigung des aus den mehreren Versorgungsgerüstmodulen (13a) zusammengesetzten Versorgungsgerüsts (13) aufweist.

9. Turm nach dem vorherigen Anspruch, **dadurch gekennzeichnet, dass** die Befestigungsvorrichtung (17) mehrere Konsolen (20) umfasst, welche an dem Betonfertigteil (5, 5a, 5b) befestigt sind, insbesondere mittels eingegossener Gewindehülsen (21) oder Gewindebolzen an dem Betonfertigteil (5, 5a, 5b) verschraubt sind, und dass die Befestigungsvorrichtung (17) vorzugsweise wenigstens zwei Streben (23) umfasst, welche jeweils zwei Konsolen (20) miteinander verbinden

10. Turm nach einem der Ansprüche 7 - 9, **dadurch gekennzeichnet, dass** das Versorgungsgerüst (13) frei in dem Turm (1) hängt und in seinem Fußbereich lediglich durch eine Lagesicherung (32) in horizontaler Richtung positioniert ist.

11. Verfahren zum Errichten eines Versorgungsgerüsts (13) im Inneren eines Turms (1), insbesondere eines Windkraftturms aus ringförmigen oder ringsegmentförmigen Betonfertigteilen (5), wobei sich das Versorgungsgerüst (13) im Wesentlichen über die gesamte Höhe des Turms (1) erstreckt und Turminneneinbauten (7, 8, 9, 10, 11, 12), insbesondere eine Leiter (7), eine Liftanordnung (8), Kabelanordnungen (10), Plattformen und Beleuchtungseinheiten (9), trägt und wobei das Versorgungsgerüst (13) aus mehreren, übereinander angeordneten und miteinander verbundenen Versorgungsgerüstmodulen (13a) errichtet wird, **dadurch gekennzeichnet, dass** die mehreren Versorgungsgerüstmodule (13a) miteinander zu einer selbsttragenden Einheit verbunden werden, welche eine fachwerkartige, vorzugsweise unter Eigengewicht und Nutzlast nicht knickstabile Gitterstruktur aufweist, und dass das Versorgungsgerüst (13) hängend an einem oberen Betonfertigteil (5) des Turms (1), insbesondere an einem Spannstück (5a) oder an einem Übergangsstück (5b) eines Hybridturms, befestigt wird und im Betrieb durch Zugkräfte aus Eigengewicht und Nutzlast stabilisiert wird.

12. Verfahren nach dem vorherigen Anspruch, **dadurch gekennzeichnet, dass** zunächst der Turm (1) aus den Betonfertigteilen (5) aufgebaut wird, anschließend das Spannstück (5a) oder das Übergangsstück (5b) aufgesetzt wird und der Turm (1) mit Spanngliedern (6) verspannt wird und schließlich eine Hubvorrichtung (26) auf dem Spannstück (5a) oder dem Übergangsstück (5b) abgestützt wird, mittels welcher das Versorgungsgerüst (13) in dem Turm (1) aufgebaut wird, indem ein Versorgungsgerüstmodul (13a) jeweils von unten mit seinem oberen Ende mit einem unteren Ende eines darüber angeordneten Versorgungsgerüstmoduls (13a) verbunden wird.

13. Verfahren nach dem vorherigen Anspruch, **dadurch gekennzeichnet, dass** ein erstes Versorgungsgerüstmodul (13a) aus mehreren Modulbauteilen (14, 15, 16) und zumindest einem Teil der Turminneneinbauten (7, 8, 9, 10, 11, 12) im Inneren des Turms (1) zusammengebaut wird, mittels der Hubvorrichtung (26) etwa um die Höhe eines Versorgungsgerüstmoduls (13a) angehoben wird, dass anschließend ein weiteres Versorgungsgerüstmodul (13a) im Inneren des Turms (1) zusammengebaut wird und mit dem ersten Versorgungsgerüstmodul (13a) verbunden wird, und die miteinander verbundenen Versorgungsgerüstmodule (13a) erneut um etwa die Höhe eines Versorgungsgerüstmoduls (13a) angehoben werden.

14. Verfahren nach dem vorherigen Anspruch, **dadurch gekennzeichnet, dass** in analoger Weise weitere Versorgungsgerüstmodule (13a) zusammengebaut werden und mit dem jeweils darüber angeordneten Versorgungsgerüstmodul (13a) verbunden werden, und dass nach der Montage des untersten Versorgungsgerüstmoduls (13a) das gesamte Versorgungsgerüst (13) an der Befestigungsvorrichtung (17) hängend befestigt wird.

15. Verfahren nach Anspruch 11, **dadurch gekennzeichnet, dass** ein erstes Versorgungsgerüstmodul (13a) aus mehreren Modulbauteilen (14, 15, 16) und zumindest einem Teil der Turminneneinbauten (7, 8, 9, 10, 11, 12) im Inneren des Turms (1) zusammengebaut wird, mittels der Hubvorrichtung (26) bis zu dem oberen Betonfertigteil (5, 5a, 5b) angehoben wird und an der Befestigungsvorrichtung (17) hängend befestigt wird.

16. Verfahren nach dem vorherigen Anspruch, **dadurch gekennzeichnet, dass** ein weiteres Versorgungsgerüstmodul (13a) aus mehreren Modulbauteilen (14, 15, 16) und zumindest einem Teil der Turminneneinbauten (7, 8, 9, 10, 11, 12) im Inneren des Turms (1) zusammengebaut wird, mittels der Hubvorrichtung (26) bis an ein unteres Ende des ersten Versorgungsgerüstmoduls (13a) angehoben wird und mit dem ersten Versorgungsgerüstmodul (13a) verbunden wird, und dass in analoger Weise weitere Versorgungsgerüstmodule (13a) zusammengebaut werden, angehoben werden und montiert werden.

## Claims

1. Supply frame (13) for a tower (1), particularly a wind turbine tower made of annular or annular segment-shaped prefabricated concrete parts (5), which supports internal tower structures (7, 8, 9, 10, 11, 12), especially a ladder (7), a lift arrangement (8), cable arrangements (10), platforms and lighting units (9) and that can be arranged in the interior of the tower (1) and extends largely over the entire height of the tower (1), in which case the supply frame (13) is made up of a plurality of supply frame modules (13a) arranged on top of one another and attached to each other, **characterized in that** the supply frame (13) made up of a plurality of supply frame modules (13a) forms a self-supporting unit that can be attached in suspended fashion to an upper prefabricated concrete part (5, 5a, 5b) of the tower (1), the supply frame (13) having a framework-like grid structure stabilized by traction forces from its own weight and live load, wherein the grid structure has no kink stability under its own weight and live load.

2. Supply frame according to the preceding claim, **characterized in that** at least one lift arrangement (8) and one ladder (7), preferably all internal tower structures (7, 8, 9, 10, 11, 12) are arranged in an interior (25) of the supply frame (13) and that the framework-like grid structure of the supply frame (13) preferably surrounds the interior (25) completely.

3. Supply frame according to the preceding claim, **characterized in that** the lift arrangement (8) and the ladder (7) are positioned in such a way in the interior (25) that the ladder (7) can be accessed from a lift cabin (8a) of the lift arrangement (8).

4. Supply frame according to one of the preceding claims, **characterized in that** at least a ladder module (7a) of the ladder (7), a lighting unit (9), rope guides (11) of the lift arrangement (8) and cable clamping strips (12) are pre-assembled on the supply frame modules (13a).

5. Supply frame according to one of the preceding claims, **characterized in that** the height of a supply frame module (13a) has at most the height of two prefabricated concrete parts (5) of the tower (1), especially the height of one prefabricated concrete part (5).

6. Supply frame according to one of the preceding claims, **characterized in that** the supply frame (13) has a position safety device (32) in its foot area for positioning in horizontal direction with respect to the tower (1).

7. Tower (1), especially a wind turbine tower made of annular or annular segment-shaped prefabricated concrete parts (5) with a supply frame (13) arranged in the interior of the tower (1) that extends largely over the entire height of the tower (1) and supports internal tower structures (7, 8, 9, 10, 11, 12), especially a ladder (7), a lift arrangement (8), cable arrangements (10), platforms and lighting units (9) and that is made up of a plurality of supply frame modules (13a) arranged on top of one another and attached to each other, **characterized in that** the supply frame (13) is executed according to one of the claims 1 - 9 .

8. Tower according to the preceding claim, **characterized in that** a prefabricated concrete part (5) of the tower (1), especially the top prefabricated concrete part (5) of the tower, particularly a spanner (5a) or a transitional part (5b) of a hybrid tower, has an attachment device (17) for the suspending attachment of the supply frame (13) made up of a plurality of supply frame models (13a).

9. Tower according to the preceding claim, **characterized in that** the attachment device (17) comprises a plurality of brackets (20), which are attached to the prefabricated concrete part (5, 5a, 5b), especially by means of cast-in threaded bushes (21) or threaded bolts screwed down to the concrete part (5, 5a, 5b) and that the attachment device (17) preferably comprises at least two struts (23) that in each case join two brackets (20) together.

10. Tower according to one of the claims 7 - 9, **characterized in that** the supply frame (13) suspends freely in the tower (1) and it is merely positioned in horizontal direction by a position safety device (32) in its foot area.

11. Method for erecting a supply frame (13) in the interior of a tower (1), especially a wind turbine tower made of annular or annular segment-shaped prefabricated concrete parts (5), in which case the supply frame (13) extends largely over the entire height of the tower (1) and supports internal tower structures (7, 8, 9, 10, 11, 12), especially a ladder (7), a lift arrangement (8), cable arrangements (10), platforms and lighting units (9), and the supply frame (13) being made up of a plurality of supply frame modules (13a) arranged on top of one another and attached to each other is erected, **characterized in that** the plurality of supply frame modules (13a) are joined together to become a self-supporting unit with a framework-like, preferably not kink-resistant grid structure under its own weight and live load, and that the supply frame (13) is attached in suspended fashion to one upper prefabricated concrete part (5) of the tower (1), especially to a spanner (5a) or to a transitional piece (5b) of a hybrid tower and is stabilized during its operation by tension forces from own weight and live load.

12. Method according to the preceding claim, **characterized in that** at first the tower (1) is built from the prefabricated concrete parts (5), and afterwards the spanner (5a) or transitional piece (5b) is placed on top and the tower (1) is braced with pre-stressing elements (6) and finally a hoisting device (26) is supported on the spanner (5a) or the transitional piece (5b) with which the supply frame (13) is built in the tower (1) by joining one supply frame module (13a) respectively from below with its upper end with a lower end of a supply frame module (13a) arranged of it.

13. Method according to the preceding claim, **characterized in that** a first supply frame module (13a) consisting of a plurality of module parts (14, 15, 16) and at least one part of the internal tower structures (7, 8, 9, 10, 11, 12) is assembled in the interior of the tower (1) and lifted approximately to the height of a supply frame module (13a) by means of the hoisting device (26), that afterwards another supply frame module (13a) is assembled in the interior of the tower (1) and joined together with the first supply frame module (13a) and the attached supply frame modules (13a) are once again lifted to about the height of a supply frame module (13a).

14. Method according to the preceding claim, **characterized in that** additional supply frame modules (13a) are assembled analogously and joined together with the respective supply frame module (13a) arranged on top, and that after the lowest supply frame module (13a) has been assembled, the entire supply frame (13) is attached in suspended fashion to the attachment device (17).

15. Method according to claim 11, **characterized in that** a first supply frame module (13a) made up of a plurality of module parts (14, 15, 16) and at least one part of the internal tower structures (7, 8, 9, 10, 11, 12) is assembled in the interior of the tower (1), lifted to the upper prefabricated concrete part (5, 5a, 5b) with the hoisting device (26) and attached in suspended fashion to the attachment device (17).

16. Method according to the preceding claim, **characterized in that** an additional supply frame module (13a) made up of a plurality of module parts (14, 15, 16) and at least one part of the internal tower structures (7, 8, 9, 10, 11, 12) is assembled in the interior of the tower (1), lifted to a lower end of the first supply frame module (13a) by means of the hoisting device (26) and joined to the first supply frame module (13a), and that additional supply frame modules (13a) are assembled, lifted and erected analogously.

## Revendications

1. Échafaudage d'approvisionnement (13) pour une tour (1), en particulier une tour d'éolienne en éléments préfabriqués (5) en béton annulaires ou en forme de segment annulaire, lequel porte des structures de tour intérieures encastrées (7, 8, 9, 10, 11, 12), en particulier une échelle (7), un ensemble d'élévateur (8), des ensembles de câbles (10), des plateformes et des unités d'éclairage (9) et lequel peut être disposé à l'intérieur de la tour (1) et s'étend essentiellement sur toute la hauteur de la tour (1), sachant que l'échafaudage d'approvisionnement (13) se compose de plusieurs modules (13a) d'échafaudage d'approvisionnement disposés les uns sur les autres et reliés les uns avec les autres, **caractérisé en ce que** l'échafaudage d'approvisionnement (13) composé des plusieurs modules (13a) d'échafaudage d'approvisionnement forme une unité autoporteuse, laquelle peut être fixée en suspension sur un élément préfabriqué en béton (5, 5a, 5b) supérieur de la tour (1), sachant que l'échafaudage d'approvisionnement (13) présente une structure en grille de type treillis, laquelle est stabilisée par les forces de traction résultant du poids propre et de la charge utile, sachant que la structure en grille n'est pas résistant au fléchissement sous l'effet du poids propre et de la charge utile.

2. Échafaudage d'approvisionnement selon la revendication précédente, **caractérisé en ce que** au moins un ensemble d'élévateur (8) et une échelle (7), de préférence toutes les structures de tour intérieures encastrées (7, 8, 9, 10, 11, 12), sont disposées dans un espace intérieur (25) de l'échafaudage d'approvisionnement (13) et que la structure en grille de type treillis de l'échafaudage d'approvisionnement (13) encercle de préférence totalement l'espace intérieur (25).

3. Échafaudage d'approvisionnement selon la revendication précédente, **caractérisé en ce que** l'ensemble d'élévateur (8) et l'échelle (7) sont positionnés l'un par rapport à l'autre dans l'espace intérieur (25) de manière à ce que l'échelle (7) soit accessible depuis une cabine d'élévateur (8a) de l'ensemble d'élévateur (8).

4. Échafaudage d'approvisionnement selon l'une des revendications précédentes, **caractérisé en ce que** au moins un module d'échelle (7a) de l'échelle (7), une unité d'éclairage (9), des guide-câbles (11) de l'ensemble d'élévateur (8) et des fixations de câbles (12) sont prémontés sur les modules (13a) d'échafaudage d'approvisionnement.

5. Échafaudage d'approvisionnement selon l'une des revendications précédentes, **caractérisé en ce que** la hauteur d'un module (13a) d'échafaudage d'approvisionnement correspond au maximum à la hauteur de deux éléments préfabriqués en béton (5) de la tour (1), en particulier, à la hauteur d'un élément préfabriqué en béton (5).

6. Échafaudage d'approvisionnement selon l'une des revendications précédentes, **caractérisé en ce que** l'échafaudage d'approvisionnement (13) comporte en sa zone de pied un dispositif (32) de blocage de position pour le positionnement, dans la direction horizontale, par rapport à la tour (1).

7. Tour (1), en particulier tour d'éolienne en éléments préfabriqués (5) en béton annulaires ou en forme de segment annulaire, avec un échafaudage d'approvisionnement (13) disposé à l'intérieur de la tour (1), lequel s'étend essentiellement sur toute la hauteur de la tour (1) et porte des structures de tour intérieures encastrées (7, 8, 9, 10, 11, 12), en particulier une échelle (7), un ensemble d'élévateur (8), des ensembles de câbles (10), des plateformes et des unités d'éclairage (9) et lequel se compose de plusieurs modules (13a) d'échafaudage d'approvisionnement disposés les uns sur les autres et reliés les uns avec les autres, **caractérisée en ce que** l'échafaudage d'approvisionnement (13) se présente sous une forme selon l'une des revendications 1 - 9.

8. Tour selon la revendication précédente, **caractérisée en ce qu'**un élément préfabriqué (5) en béton de la tour (1), en particulier l'élément préfabriqué (5) en béton le plus haut de la tour, en particulier un élément de serrage (5a) ou un élément de transition (5b) d'une tour hybride, comporte un dispositif de fixation (17) pour la fixation en suspension de l'échafaudage d'approvisionnement (13) composé des plusieurs modules (13a) d'échafaudage d'approvisionnement.

9. Tour selon la revendication précédente, **caractérisée en ce que** le dispositif de fixation (17) comporte plusieurs consoles (20), lesquelles sont fixées sur l'élément préfabriqué (5, 5a, 5b) en béton, en particulier boulonnées sur l'élément préfabriqué (5, 5a, 5b) en béton au moyen de douilles filetées (21) enrobées ou de goujons filetés, et que le dispositif de fixation (17) comporte de préférence au moins deux croisillons (23), lesquels relient respectivement deux consoles (20) l'une avec l'autre.

10. Tour selon l'une des revendications 7-9, **caractérisée en ce que** l'échafaudage d'approvisionnement (13) est suspendu librement dans la tour (1) et qu'il est positionné en sa zone de pied, dans la direction horizontale, seulement au moyen d'un dispositif (32) de blocage de position.

11. Procédé pour édifier un échafaudage d'approvisionnement (13) à l'intérieur d'une tour (1), en particulier une tour d'éolienne en éléments préfabriqués (5) en béton annulaires ou en forme de segment annulaire, sachant que l'échafaudage d'approvisionnement (13) s'étend essentiellement sur toute la hauteur de la tour (1) et porte des structures de tour intérieures encastrées (7, 8, 9, 10, 11, 12), en particulier une échelle (7), un ensemble d'élévateur (8), des ensembles de câbles (10), des plateformes et des unités d'éclairage (9) et sachant que l'échafaudage d'approvisionnement (13) est édifié à partir de plusieurs modules (13a) d'échafaudage d'approvisionnement disposés les uns sur les autres et reliés les uns avec les autres, **caractérisé en ce que** les plusieurs modules (13a) d'échafaudage d'approvisionnement sont reliés les uns avec les autres en une unité autoporteuse, laquelle présente une structure en grille de type treillis de préférence non résistante au fléchissement sous l'effet du poids propre et de la charge utile, et que l'échafaudage d'approvisionnement (13) est fixé en suspension sur un élément préfabriqué (5) en béton supérieur de la tour (1), en particulier sur un élément de serrage (5a) ou un élément de transition (5b) d'une tour hybride, et qu'il est stabilisé en fonctionnement par les forces de traction résultant du poids propre et de la charge utile.

12. Procédé selon la revendication précédente, **caractérisé en ce que** la tour (1) est d'abord édifié à partir des éléments préfabriqués (5) en béton, l'élément de serrage (5a) ou l'élément de transition (5b) est ensuite posé et la tour (1) est calée à l'aide de membres de précontrainte (6) et, finalement, un dispositif de levage (26) est adossé sur l'élément de serrage (5a) ou l'élément de transition (5b), à l'aide duquel l'échafaudage d'approvisionnement (13) est dressé dans la tour (1) en reliant respectivement un module (13a) d'échafaudage d'approvisionnement par le bas, par son extrémité supérieure, avec une extrémité inférieure d'un module (13a) d'échafaudage d'approvisionnement disposé au-dessus.

13. Procédé selon la revendication précédente, **caractérisé en ce qu'**un premier module (13a) d'échafaudage d'approvisionnement est assemblé à l'intérieure de la tour (1) à partir de plusieurs composants de module (14, 15, 16) et, au moins, d'une partie des structures de tour intérieures encastrées (7, 8, 9, 10, 11, 12), qu'il est levé à l'aide du dispositif de levage (26) approximativement de la hauteur d'un module (13a) d'échafaudage d'approvisionnement, qu'ensuite un module (13a) d'échafaudage d'approvisionnement supplémentaire est assemblé à l'intérieur de la tour (1) et relié avec le premier module (13a) d'échafaudage d'approvisionnement, et les modules (13a) d'échafaudage d'approvisionnement reliés l'un avec l'autre sont une nouvelle fois levés approximativement de la hauteur d'un module (13a) d'échafaudage d'approvisionnement.

14. Procédé selon la revendication précédente, **caractérisé en ce que** d'autres modules (13a) d'échafaudage d'approvisionnement sont assemblés de la même manière et reliés avec le module (13a) d'échafaudage d'approvisionnement respectivement disposé au-dessus, et qu'après le montage du module (13a) d'échafaudage d'approvisionnement le plus bas, l'ensemble de l'échafaudage d'approvisionnement (13) est fixé en suspension sur le dispositif de fixation (17).

15. Procédé selon la revendication 11, caractérisé en ce qu'un premier module (13a) d'échafaudage d'approvisionnement est assemblé à l'intérieure de la tour (1) à partir de plusieurs composants de module (14, 15, 16) et, au moins, d'une partie des structures de tour intérieures encastrées (7, 8, 9, 10, 11, 12), levé à l'aide du dispositif de levage (26) jusqu'à l'élément préfabriqué (5, 5a, 5b) en béton et fixé en suspension sur le dispositif de fixation (17).

16. Procédé selon la revendication précédente, **caractérisé en ce qu'**un module (13a) d'échafaudage d'approvisionnement supplémentaire est assemblé à l'intérieure de la tour (1) à partir de plusieurs composants de module (14, 15, 16) et, au moins, d'une partie des structures de tour intérieures encastrées (7, 8, 9, 10, 11, 12), qu'il est levé à l'aide du dispositif de levage (26) jusqu'à une extrémité inférieure du premier module (13a) d'échafaudage d'approvisionnement et relié avec le premier module (13a) d'échafaudage d'approvisionnement, et que d'autres modules (13a) d'échafaudage d'approvisionnement sont assemblés, levés et montés de la même manière.
